# DEMANDE DE BREVET EUROPEEN

(11) **EP 0 918 000 A1**
(43) Date de publication de la demande: **26.05.1999**
(21) Numéro de dépôt: 98121527.0
(22) Date de dépôt: 17.11.1998
(51) Int. Cl.: B60R 25/02

(54) **Antivol pour un arbre de colonne de direction de véhicule automobile**

(30) Priorité: 19.11.1997 FR 9714605
(71) Demandeur: VALEO SECURITE HABITACLE, 94000 Créteil (FR)
(72) Inventeur: Garnault, Joel, 95110 Sannois (FR)
(74) Mandataire: Gamonal, Didier

(57) **Abrégé**

L'invention propose un antivol pour un arbre de colonne de direction de véhicule automobile,
caractérisé en ce qu'il comporte un bloc d'immobilisation (14) qui est monté coulissant axialement sur la colonne entre une position dégagée et une position engagée, en ce que le bloc d'immobilisation (14) comporte une douille externe (16) immobilisée en rotation et une douille interne (20) qui, en position engagée, est immobilisée en rotation par rapport à l'arbre de colonne (12), et en ce que le bloc d'immobilisation (14) comporte un dispositif à friction (30) qui est susceptible d'être commandé entre un état de repos et un état actif dans lequel il assure l'immobilisation en rotation de la douille interne (20) par rapport à la douille externe (16).

## Description

L'invention concerne un antivol pour un arbre de colonne de direction de véhicule automobile.

Les antivols connus utilisent généralement, pour bloquer toute rotation de l'arbre de la colonne de direction, un péne escamotable qui est solidaire d'un élément de structure du véhicule et qui, lorsque l'antivol est enclenché, est emboîté dans une gâche aménagée dans l'arbre pour l'immobiliser en rotation autour de son axe.

Un tel dispositif, pourtant largement utilisé, présente un certain nombre d'inconvénients.

Tout d'abord, lorsque le conducteur enclenche le système de verrouillage, celui-ci n'est pas réalisé automatiquement. En effet, l'antivol n'est véritablement actif que lorsque le pêne est engagé dans la gâche, ce qui n'est possible que si la gâche, et donc l'arbre de colonne, occupe une position angulaire particulière en vis-à-vis du pêne. Bien entendu, il a été proposé de munir l'arbre de colonne d'une série de gâches réparties angulairement de manière régulière mais il reste la plupart du temps obligatoire pour le conducteur de manoeuvrer le volant après avoir enclenché l'antivol pour mettre en correspondance une gâche de la colonne avec le pêne et provoquer ainsi une mise en action effective de l'antivol.

Cette mise en action effective se détecte généralement par un claquement qui correspond à l'arrivée en butée du pêne en position verrouillée effective. La colonne de direction et le volant ne disposent alors plus que d'un débattement angulaire limité.

Par ailleurs, une telle conception d'un antivol de la colonne de direction oblige le conducteur à agir sur le volant au moment du déverrouillage pour permettre au pêne d'être dégagé de la gâche. En effet, les forces de frottement du pêne contre les parois latérales de la gâche peuvent empêcher le retrait du pêne et il est nécessaire d'utiliser le débattement angulaire du pêne dans la gâche pour pouvoir libérer le pêne en supprimant le contact avec les parois de la gâche.

Par ailleurs, il est courant que, lors d'une tentative d'effraction, il soit appliqué un couple très élevé sur la colonne de direction, par l'intermédiaire du volant, pour tenter de rompre le pêne ou l'un de ses éléments de commande.

Si le pêne et son mécanisme de commande résistent à de tels efforts, le cambrioleur tentera d'augmenter l'effort appliqué à la colonne, ce qui peut conduire à la dégradation des autres éléments de la direction tels que le volant ou même le support de l'arbre de la colonne.

Au contraire, si le pêne et son mécanisme cèdent, il peut devenir possible de conduire le véhicule. Toutefois la rupture d'une des pièces du mécanisme pose de graves problèmes pour sa fiabilité de fonctionnement car il peut alors se produire des blocages intempestifs de la colonne de direction en cours de roulage du véhicule.

Afin d'apporter une solution à ces différents problèmes, l'invention propose une nouvelle conception pour un antivol de colonne de direction de véhicule automobile, caractérjsé en ce qu'il comporte un bloc d'immobilisation qui est monté coulissant axialement sur la colonne entre une position dégagée et une position engagée, en ce que le bloc d'immobilisation comporte une douille externe immobilisée en rotation et une douille interne qui, en position engagée, est immobilisée en rotation par rapport à la colonne, et en ce que le bloc d'immobilisation comporte un dispositif à friction qui est susceptible d'être commandé entre un état de repos et un état actif dans lequel il assure l'immobilisation en rotation de la douille interne par rapport à la douille externe.

Selon d'autres caractéristiques de l'invention :
- le dispositif à friction comporte un élément de friction qui est déformable élastiquement et qui est commandé par serrage axial pour assurer l'immobilisation de la douille interne par rapport à la douille externe ;
- le bloc est déplacé entre ses positions dégagée et engagée par un dispositif d'actionnement qui assure la commande du dispositif à friction lorsque le bloc est en position engagée ;
- l'élément de friction est serré axialement par le dispositif d'actionnement contre une paroi transversale du bloc qui est solidaire axialement des douilles interne et externe et, en position engagée, les douilles sont immobilisées axialement de manière que le dispositif d'actionnement puisse assurer le serrage de l'élément de friction ;
- le dispositif d'actionnement assure le déplacement du bloc de sa position dégagée à sa position engagée en coopérant en appui axialement contre l'élément de friction, et l'effort transmis à l'élément de friction au cours du déplacement du bloc est inférieur à l'effort nécessaire pour déformer l'élément de friction vers son état actif ;
- le dispositif d'actionnement comporte un actionneur linéaire qui agit sur l'élément de friction par l'intermédiaire d'un organe de transmission ;
- l'actionneur linéaire s'étend parallèlement à l'arbre de colonne, et il agit sur l'élément de friction par l'intermédiaire d'un levier qui est articulé sur le bloc autour d'un axe transversal perpendiculaire à l'axe de la colonne ;
- l'actionneur linéaire agit sur l'élément de friction par l'intermédiaire d'un mécanisme à trois belles qui sont articulées ensemble autour d'un axe transversal perpendiculaire à l'axe de la colonne par une première de leurs extrémités respectives et qui sont articulées par leurs extrémités opposées respectivement sur un élément mobile de l'actionneur, sur un corps fixe de l'antivol, et sur une couronne d'appui qui est en appui contre l'élément de friction ;
- lorsque le bloc d'immobilisation est en position engagée et que le dispositif à friction est à l'état actif, les bielles reliées au corps fixe et à la couronne d'appui sont alignées sensiblement parallèlement à l'arbre de colonne, selon des sens opposés autour de leurs extrémités d'articulation commune, et la bielle reliée à l'actionneur s'étend sensiblement perpendiculairement à l'axe de l'arbre de colonne ;
- le bloc est déplacé d'arrière en avant le long de l'arbre de colonne de sa position dégagée à sa position engagée, la couronne d'appui est en appui contre une face arrière de l'élément de friction, et la couronne d'appui comporte au moins une patte qui s'étend vers l'avant et sur une extrémité avant de laquelle est articulée la belle correspondante du mécanisme ;
- le corps fixe sur lequel est accrochée l'une des belles est agencé axialement en arrière de la position du bloc d'immobilisation en position dégagée ;
- l'actionneur linéaire est un système vis écrou dont la vis est agencée parallèlement à l'arbre de la colonne et dont l'écrou, immobilisé en rotation, assure le déplacement axial du bloc d'immobilisation ;
- lorsque le bloc d'immobilisation est en position engagée, la douille interne est rendue solidaire de l'arbre de colonne par des cannelures en relief d'orientation axiale.
- les cannelures de la douille interne et de l'arbre comportent chacune une extrémité axiale d'engagement dont la largeur selon une direction tangentielle se réduit pour former une pointe ;
- la douille interne comporte une bague d'orientation qui coopère avec les cannelures de l'arbre pour provoquer une rotation de la douille interne si, au moment de l'engagement de la douille, les cannelures de la douille et de l'arbre se présentent axialement pointe contre pointe ;
- la bague d'orientation de la douille interne est fixée à l'extrémité axiale avant de la douille dans le sens de son engagement sur les cannelures de l'arbre ;
- la bague d'orientation comporte deux dents qui s'étendent axialement vers l'avant, qui sont sensiblement diamétralement opposées l'une par rapport a l'autre de part et d'autre de l'axe de l'arbre, et qui comportent une extrémité avant d'engagement effilée selon une direction tangentielle, les extrémités avant des dents sont conformées de telle sorte que les deux dents ne peuvent être simultanément agencées pointe contre pointe en regard des cannelures de l'arbre, la bague est mobile par rapport à la douille interne selon une direction diamétrale de la bague passant par l'une des dents, et les extrémités d'engagement des dents de la bague et des cannelures de l'arbre comportent une surface radiale, respectivement interne et externe, qui est biseautée de manière que l'extrémité d'engagement présente une épaisseur radiale qui se réduit ;
- l'antivol comporte des moyens pour augmenter le serrage axial de l'élément de friction lorsqu'un couple est appliqué sur l'arbre de colonne alors que le bloc d'immobilisation est dans son état actif ;
- l'élément de friction est serré axialement par l'intermédiaire de deux couronnes superposées indépendantes qui sont en appui axialement l'une contre l'autre par un jeu de surfaces de commande, une première couronne est immobile en rotation autour de son axe par rapport à la structure du véhicule tandis que la seconde couronne est liée en rotation avec la douille externe, la douille externe possède une course angulaire libre autour de l'axe de la colonne entre deux positions angulaires d'immobilisation, de part et d'autre d'une position angulaire neutre, et lorsque la douille externe est écartée angulairement de sa position neutre, la seconde couronne tourne par rapport à la première et les surfaces de commandes des couronnes coopèrent pour écarter axialement les couronnes l'une de l'autre et ainsi provoquer un serrage supplémentaire de l'élément de friction ;
- l'antivol comporte un capteur d'effort qui détecte, lorsque le bloc d'immobilisation est dans son état actif, qu'un couple est appliqué sur l'arbre de colonne.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective avec arrachement illustrant le principe d'un antivol selon l'invention ;
- les figures 2 et 3 sont des vues schématiques qui illustrent les moyens permettant d'assurer une orientation angulaire correcte de la douille interne de l'antivol selon l'invention lors de son engagement sur les cannelures de l'arbre, la figure 2 étant une vue latérale développée du dispositif et la figure 3 étant une vue en coupe axiale ;
- les figures 4 et 5 sont des vues en coupe axiale d'un premier mode de réalisation de l'invention illustré respectivement en position dégagée et engagée ;
- la figure 6 est une vue agrandie d'un détail de la figure 4 ;
- les figures 7 et 8 sont des vues similaires à celles des figures 4 et 5 illustrant un deuxième mode de réalisation de l'invention ;
- les figures 9 et 10 sont des vues similaires à celles des figures 4 et 5 illustrant un troisième mode de réalisation de l'invention ; et
- la figure 11 est une vue partielle en perspective éclatée d'un quatrième mode de réalisation de l'invention comportant des moyens pour appliquer un effort de serrage supplémentaire sur l'élément de friction en cas de tentative d'effraction.

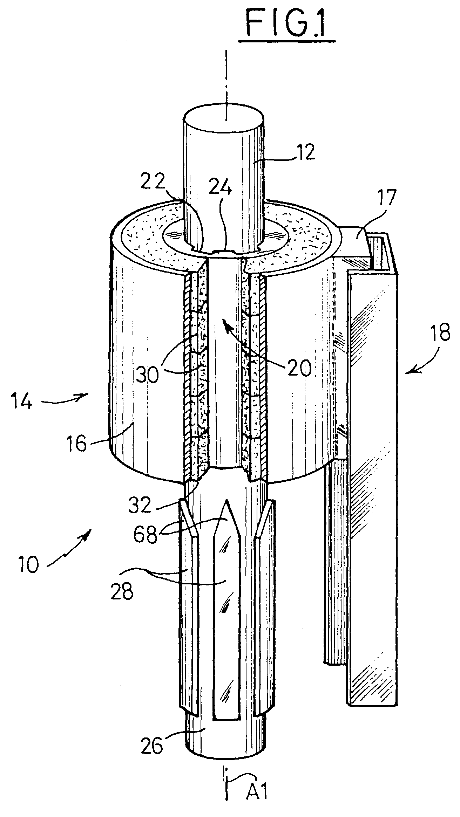

On a représenté sur la figure 1, de manière schématique et partielle, un antivol 10 qui est destiné à assurer l'immobilisation en rotation autour de son axe A1 d'un arbre de colonne 12 d'une colonne de direction de véhicule automobile.

L'arbre de colonne 12 est généralement monté à rotation dans un tube de colonne (non représenté) et il est relié par une extrémité supérieure au volant du véhicule et par une extrémité inférieure à un mécanisme d'orientation des roues directrices du véhicule.

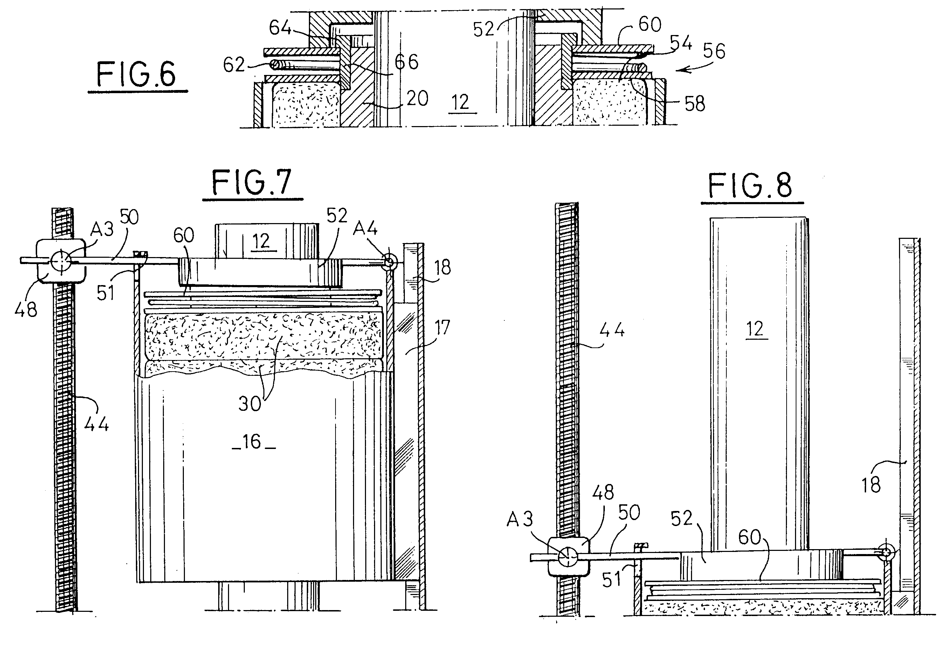

Conformément aux enseignements de l'invention, l'antivol 10 comporte essentiellement un bloc d'immobilisation 14 qui est de forme générale tubulaire cylindrique et qui entoure l'arbre de colonne 12. Le bloc d'immobilisation 14 est susceptible de coulisser axialement le long de l'arbre 12 entre une position reculée dégagée qui est illustrée à la figure 1 et une position avancée engagée qui est illustrée plus particulièrement aux figures 5, 8 et 10.

Plus précisément, le bloc d'immobilisation 14 comporte notamment une douille externe 16 qui est de forme générale tubulaire cylindrique et qui est immobilisée en rotation autour de l'axe A1 par rapport à un bâti. A cet effet, la douille externe 16 comporte, en relief sur une face cylindrique externe, un rail de guidage 17 qui est orienté axialement et qui est engagé dans une glissière 18 de manière à permettre le coulissement du bloc d'immobilisation 14 entre ses positions dégagée et engagée tout en assurant son immobilisation en rotation. La glissière 18 peut par exemple être portée par le tube de colonne.

Le bloc d'immobilisation 14 comporte également une douille interne 20 qui est agencée coaxialement à l'intérieur de la douille externe 16.

La douille interne 20, elle aussi de forme générale cylindrique tubulaire, comporte sur une surface cylindrique interne 22 des cannelures en relief 24 qui s'étendent axialement. De même, l'arbre 12 comporte, sur sa surface cylindrique externe 26, une série de cannelures en relief complémentaires 28 qui sont disposées de manière à présenter entre elles le même pas angulaire que celui qui sépare chacune des cannelures 24 de la douille interne 20.

Lorsque le bloc d'immobilisation 14 est en position avancée engagée, les cannelures 24 de la douille interne 20 sont reçues entre les cannelures 28 de l'arbre 12 de manière à rendre solidaire en rotation la douille externe 20 de l'arbre 12.

Au contraire, lorsque le bloc d'immobilisation 14 est en position reculée dégagée illustrée par exemple à la figure 1, les cannelures 24 de la douille externe 20 sont dégagées des cannelures 28 de l'arbre 12 si bien que la douille interne 20 est libre en rotation par rapport à l'arbre de colonne 12.

Pour assurer le verrouillage de l'antivol, il est prévu que, lorsque le bloc d'immobilisation 14 est en position engagée, la douille externe 16 et la douille interne 20 sont rendues solidaires l'une de l'autre en rotation de telle manière que, la douille externe 16 étant liée en rotation à un élément fixe 18 et la douille interne 20 étant solidaire en rotation de l'arbre 12, ce dernier soit immobilisé en rotation autour de son axe A1, rendant ainsi le véhicule inconduisible.

A cet effet, les deux douilles 16, 20 sont rendues solidaires en rotation par un dispositif à friction.

Dans les différents exemples de réalisation illustrés sur les figures, le dispositif à friction comporte une série d'anneaux 30 en matière élastomère qui sont empilés axialement l'un au-dessus de l'autre dans un espace cylindrique annulaire délimité entre les deux douilles 16, 20.

Les anneaux 30 peuvent éventuellement être séparés par des rondelles intercalaires (non représentées).

Les anneaux élastomères 30 sont en appui contre une paroi transversale avant 32 du bloc 14, solidaire de la douille externe 16. Par ailleurs, il est prévu des moyens (non représentés sur la figure 1) qui permettent de serrer axialement ces anneaux élastomères 30 contre la paroi 32 de manière qu'ils se déforment et qu'ils viennent au contact radialement par leurs surfaces latérales interne 34 et externe 36 respectivement contre une surface cylindrique externe 38 de la douille interne 20 et une surface cylindrique interne 40 de la douille externe 16. L'antivol est alors dans un état actif.

Toutefois, d'autres dispositifs à friction pourraient être utilisés pour rendre solidaire les deux douilles 16, 20 lorsque le bloc d'immobilisation 14 est en position engagée. Ainsi, il est possible d'utiliser un dispositif semblable à un embrayage multidisques, comportant une série de disques empilés qui sont alternativement liés à l'une et à l'autre des deux douilles 16, 20 de manière que, lorsque les disques sont serrés axialement l'un contre l'autre, les deux douilles sont rendues solidaires l'une de l'autre en rotation.

L'utilisation d'un dispositif à friction est particulièrement avantageuse car cela permet de déterminer un couple maximal d'accouplement entre les deux douilles 16, 20 pour empêcher que l'antivol ne soit détruit lors d'une tentative d'effraction lorsque le cambrioleur essaye de forcer l'antivol en agissant sur le volant de la colonne de direction.

En effet, au-delà de ce couple maximal, il y a une possibilité de rotation de la douille interne 20, et donc de l'arbre 12, autour de l'axe A1 sans pour autant qu'il n'y ait de rupture d'un quelconque élément de l'antivol, par simple glissement du dispositif à friction. Au contraire, dès que le couple exercé sur l'arbre 12 cesse d'être appliqué ou redevient inférieur à la valeur limite, l'arbre de direction 12 est de nouveau immobilisé en rotation.

On peut par exemple prévoir que le couple maximal d'accouplement obtenu grâce au dispositif à friction soit de l'ordre de 100 à 200 Newton mètres, couple qui rend impossible la conduite du véhicule même s'il n'empêche pas un léger braquage des roues.

Par ailleurs, l'utilisation d'un dispositif à friction pour immobiliser en rotation la douille interne 20 par rapport à la douille externe 16 permet d'enclencher ce verrouillage quelle que soit la position angulaire relative des deux pièces, ce qui n'est pas le cas avec les dispositifs du type à pêne et à gâche dans lesquels l'enclenchement du verrouillage ne peut s'effectuer que lorsque le pêne et la gâche sont en regard l'un de l'autre.

Pour assurer les déplacements du bloc d'immobilisation 14 et le serrage axial des anneaux élastomères 30, il est prévu différents modes de réalisation des moyens d'entraînement du bloc 14.

Tous les modes de réalisation représentés font appel à un dispositif vis-écrou motorisé 42 comportant une vis 44 qui s'étend parallèlement à l'axe A1 de l'arbre 12, qui est entraînée en rotation autour de son axe A2 par un moteur électrique 46, et sur laquelle est monté un écrou 48 qui porte un bras d'actionnement 50. L'écrou 48 est immobilisé en rotation autour de l'axe A2 de la vis, de telle sorte que lorsque la vis 44 est entraînée en rotation par le moteur électrique 46, l'écrou 48 se déplace selon la direction axiale.

Cependant, le système vis écrou n'est qu'un mode de réalisation possible qui peut être remplacé par d'autres types d'actionneurs linéaires sans sortir du cadre de l'invention.

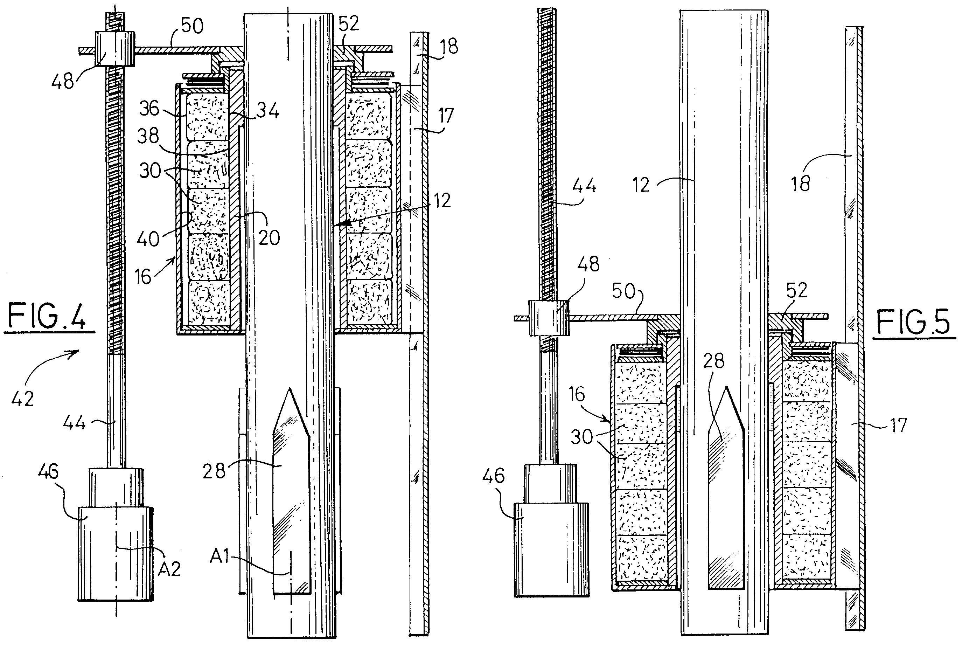

Comme on peut le voir sur les figures 4 et 5, le bras d'actionnement 50 s'étend perpendiculairement aux axes A1, A2 et il porte une couronne 52 annulaire d'axe A1 qui est engagée autour de l'arbre de colonne 12 et qui est destinée à venir en appui axialement vers l'avant sur l'empilement d'anneaux élastomères 30 de manière à transmettre le déplacement axial de l'écrou 48, à la fois pour déplacer le bloc d'immobilisation 14 entre ses positions engagée et dégagée et pour serrer axialement les anneaux élastomères 30 contre la paroi transversale avant 32.

Toutefois, comme cela est représenté plus précisément sur la figure 6, la couronne 52 est destinée à venir en appui non pas directement contre la face transversale arrière de l'empilement des anneaux 30, mais par l'intermédiaire d'un dispositif à ressort 56.

Le dispositif à ressort 56 comporte une rondelle annulaire avant 58 qui est en appui contre la face transversale arrière 54 de l'empilement des anneaux élastomères 30, et une rondelle annulaire arrière 60, un ressort hélicoïdal 62 étant intercalé entre les deux rondelles 58, 60 pour les écarter axialement l'une de l'autre. A l'état libre, tel que représenté sur les figures 4 et 6, le ressort 62 sollicite la rondelle arrière 60 axialement vers l'arrière en appui contre un rebord transversal 64 d'une pièce de fermeture 66 qui est solidaire de la douille interne 20 et qui empêche le ressort 62 de se détendre complètement.

Bien entendu, le ressort 62 peut également être réalisé sous la forme d'une ou plusieurs rondelles élastiques, par exemple des rondelles type Belleville.

A l'état libre, l'effort de compression du ressort 62 exerce sur la rondelle avant 58 un effort suffisamment faible pour que la déformation des anneaux élastomères 30 soit minime et que ceux-ci ne viennent pas au contact à la fois des surfaces latérales interne 40 de la douille externe 16 et externe 38 de la douille interne 20.

Lorsque l'on veut amener le bloc d'immobilisation 14 de sa position dégagée à sa position engagée, il suffit donc de commander le moteur électrique 46 pour faire tourner la vis 44 de telle sorte que l'écrou 48 se déplace axialement vers l'avant.

Ainsi, par l'intermédiaire du bras 50 et de la couronne 52, l'écrou 48 provoque dans un premier temps le déplacement du bloc d'immobilisation 14 vers sa position engagée.

Une fois que le bloc 14 a atteint sa position engagée, il est immobilisé axialement, par exemple en appui contre des surfaces de butée (non représentées) de telle sorte que, lorsque l'écrou 48 poursuit son mouvement axialement vers l'avant, la couronne 52, qui prend appui contre la rondelle arrière 60 du dispositif à ressort 56, tend à écraser le ressort de compression 62, ce qui en retour provoque un écrasement de l'empilement des anneaux élastomères 30. Les surfaces de butée qui immobilisent axialement le bloc 14 en position engagée peuvent par exemple être formées sur le tube de colonne.

Ainsi, les moyens d'entraînement selon l'invention permettent dans un premier temps d'assurer un coulissement du bloc d'immobilisation 14, puis un verrouillage en rotation des deux douilles 16, 20.

Un tel découplage est nécessaire car, au moment de l'engagement des cannelures 24 de la douille interne 20 entre les cannelures 28 de l'arbre 12, il peut être nécessaire de réaliser un léger pivotement de la douille interne autour de son axe pour le cas où les cannelures 24, 28 se présentent en regard l'une de l'autre.

A cet effet, et comme on peut le voir par exemple sur la figure 1, il est prévu que les cannelures 24, 28 des deux douilles 16, 20 possèdent chacune une extrémité axiale d'engagement effilée.

Comme on le voit sur la figure 1, l'extrémité arrière 68 de chacune des cannelures 28 de l'arbre 12 présente une largeur selon une direction tangentielle qui se réduit pour former une pointe symétrique par rapport à un axe médian de la cannelure.

De même, l'extrémité avant de chacune des cannelures 24 de la douille interne 20 est en forme de pointe de telle sorte que, lorsque la douille interne 20 est approchée axialement des cannelures 28 alors que ses cannelures 24 ne sont pas exactement agencées en regard d'un espace qui sépare deux cannelures 28 de l'arbre 12, les extrémités d'engagement en forme de pointe coopèrent l'une avec l'autre pour provoquer une légère rotation de la douille interne 20 de manière que ses cannelures 24 soient engagées entre les cannelures 28 de l'arbre 12.

Cependant, avec un tel dispositif, il est malgré tout possible que les cannelures 24, 28 de la douille interne 20 et de l'arbre 12 se présentent strictement en pointe contre pointe, auquel cas on risque d'aboutir à une situation de blocage, la douille 20 ne pouvant pas pivoter autour de son axe A1 et empêchant ainsi le passage du bloc 14 vers sa position engagée.

A cet effet, on peut prévoir de munir la douille interne 20 du bloc d'immobilisation 14 d'un dispositif d'orientation empêchant que les cannelures respectives de la douille 20 et de l'arbre 12 ne puissent se présenter strictement pointe contre pointe.

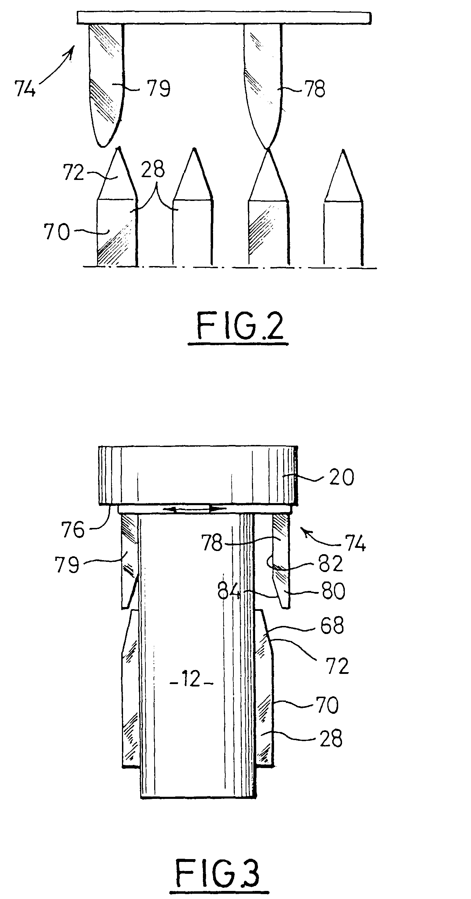

Un tel dispositif est illustré de manière schématique aux figures 2 et 3.

Dans un tel dispositif, les cannelures 28 de l'arbre 12 présentent une extrémité arrière d'engagement 68 dont, comme vu précédemment, la largeur selon une direction tangentielle se réduit pour former une pointe, mais qui est également biseautée selon une direction radiale. Ainsi, la surface radiale externe 70 de chacune des cannelures 28 de l'arbre 12 comporte, au niveau de l'extrémité d'engagement 68, un pan incliné 72 de telle sorte que l'épaisseur radiale de la cannelure 28 se réduit lorsqu'on progresse axialement vers l'extrémité arrière de la cannelure 28.

Le dispositif d'orientation comporte aussi une bague d'orientation 74 qui est solidaire d'une extrémité axiale avant 76 de la douille interne 20 et qui comporte par exemple deux dents 78, 79 qui s'étendent axialement vers l'avant. Les deux dents 78, 79 de la bague d'orientation 74 sont agencées de manière sensiblement diamétralement opposée par rapport à l'axe A1 de l'arbre 12, chacune angulairement en correspondance avec l'une des cannelures 24 de la douille interne 20.

Les extrémités avant 80 des dents 78, 79 sont elles aussi biseautées selon une direction radiale. En effet, une surface radiale interne 82 de chacune de ces dents 78 comporte, au niveau de l'extrémité avant d'engagement 80, un pan incliné 84 de telle manière que l'épaisseur radiale de la dent 78 diminue lorsque l'on progresse axialement vers l'avant, le long de l'extrémité avant de la dent 78. Le pan incliné 84 est complémentaire de celui 72 des cannelures 28 de l'arbre 12.

Par ailleurs, les extrémités avant 80 des dents 78, 79 sont taillées en forme de pointe selon une direction tangentielle, mais, comme on peut le voir sur la figure 2 où la bague 74 est représentée en développé, les extrémités ainsi formées ne présentent pas un profil symétrique par rapport à l'axe médian de chacune des dents. De plus, les profils des extrémités des deux dents sont inversés l'un par rapport à l'autre de telle sorte que la distance angulaire qui sépare l'extrémité pointue des deux dents 78, 79 est différente de celle qui sépare l'extrémité pointue des cannelures 24 correspondantes de la douille interne 20.

Or, les cannelures 28 de l'arbre 12 étant disposées de manière correspondante à celle de la douille interne 20, il en résulte que les deux dents 78, 79 ne peuvent être simultanément agencées en regard axialement en pointe contre pointe en vis-à-vis des extrémités d'engagement 68 des cannelures 28 de l'arbre 12, ainsi que cela est illustré à la figure 2.

Enfin, la bague d'orientation 74 est mobile par rapport à la douille 20 selon une direction diamétrale passant par une des deux dents 78, 79, et les deux dents 78, 79 sont agencées sur un cercle d'axe parallèle à l'axe A1 et de plus grand rayon que celui sur lequel sont agencées les cannelures 24, 28 de la douille interne 20 et de l'arbre 12.

Comme on peut le voir sur la figure 3, le débattement de la bague 74 est tel que l'une des deux dents 78, 79 peut chevaucher radialement l'une des cannelures 28 de l'arbre 12, sa face radiale interne 82 étant en appui contre la face radiale externe 70 de la cannelure 28, mais l'autre des dents est alors sensiblement en appui contre la face cylindrique externe 26 de l'arbre 12.

Le fonctionnement du dispositif d'orientation est le suivant.

Lorsque le bloc d'immobilisation 14 est amené vers sa position d'engagement, les dents 78, 79 arrivent au niveau des extrémités d'engagement 68 des cannelures 28. Si une première des dents 78, 79 se présente angulairement exactement en regard en pointe contre pointe de l'une des cannelures de l'arbre 12, la seconde des dents 78, 79 est obligatoirement légèrement décalée angulairement par rapport aux cannelures 28.

Dans une première hypothèse, la bague d'orientation 74 est positionnée radialement de telle sorte que la première dent se présente en étant sensiblement en appui contre la face latérale 26 de l'arbre 12. Sa face biseautée 84 va alors coopérer avec celle 72 de la cannelure 28 en regard pour provoquer un déplacement radial de la bague d'orientation 74 de telle manière que cette première dent va se déplacer radialement vers l'extérieur tandis que la seconde dent va se déplacer radialement vers l'intérieur. Cette dernière, ne pouvant pas être en coïncidence exactement pointe contre pointe avec une cannelure 28, sera obligatoirement reçue entre deux cannelures 28. Ainsi, l'un des bords de son profil effilé pourra coopérer avec l'extrémité d'engagement 68 de l'une des cannelures 28 pour provoquer une rotation de la bague 74 et de la douille 20 et permettre ainsi au bloc d'immobilisation 14 d'être amené jusqu'à sa position d'engagement.

Dans une seconde hypothèse, la première dent, qui est angulairement exactement en regard de l'une des cannelures de l'arbre 12, est dégagée radialement vers l'extérieur par rapport à l'arbre de colonne 12 de telle sorte que la seconde dent est sensiblement en appui contre la face latérale 26 de l'arbre 12. A ce moment-là, la seconde dent, qui est obligatoirement décalée angulairement des pointes des cannelures de l'arbre, va pouvoir directement provoquer la rotation nécessaire de la bague 74 et de la douille 20 pour permettre au bloc 14 d'être amené jusqu'à sa position d'engagement.

On a illustré sur les figures 7 et 8 un deuxième mode de réalisation de l'invention qui diffère du premier en ce qu'il permet d'obtenir un plus grand effort de serrage des blocs élastomères 30.

En effet, le pas de la vis 44 et la vitesse de rotation de celle-ci déterminent dans une large mesure le temps qu'il est nécessaire pour faire passer le bloc d'immobilisation 14 de l'une à l'autre de ses positions d'engagement.

De même, ces paramètres déterminent, en fonction du couple moteur du moteur électrique 46, l'effort qui peut être exercé par le bras 50 sur le dispositif à friction.

Or, plus on cherche à réduire le temps de passage du bloc 14 de l'une vers l'autre de ses positions dégagée et engagée, plus on réduit l'effort susceptible d'être transmis, pour un couple moteur donné, au dispositif à friction.

Aussi, dans le mode de réalisation de réalisation de la figure 7, le bras de commande 50 est articulé par une première extrémité sur l'écrou 48, autour d'un axe transversal A3, et par une seconde extrémité sur l'extrémité supérieure de la douille externe 16, diamétralement à l'opposé de la vis 44 par rapport à l'axe A1, autour d'un axe transversal A4.

La course angulaire du bras de commande 50 autour de l'axe A4 par rapport à la douille externe 16 est par ailleurs limitée par une surface de butée 51 de manière que le bras 50 puisse malgré tout assurer l'entraînement axial du bloc d'immobilisation 14 vers sa position dégagée.

Cette disposition permet d'augmenter, par effet de levier, l'effort qui est exercé par la couronne 52 sur le dispositif de friction, tout en évitant tout effort en porte-à-faux sur l'écrou 48.

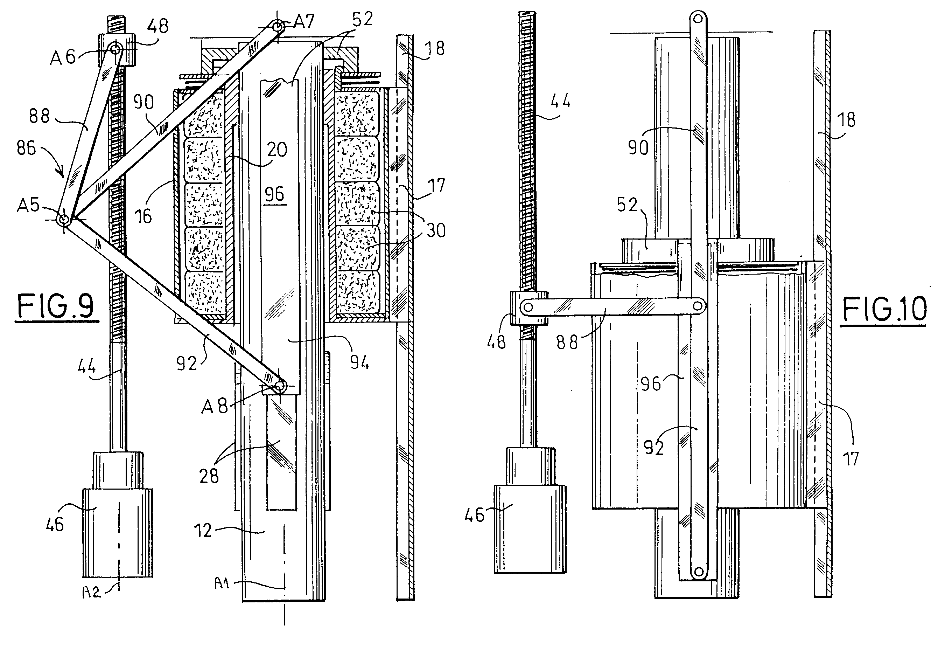

On a représenté sur les figures 9 et 10 un troisième mode de réalisation de l'invention qui permet avantageusement d'obtenir à la fois un déplacement rapide du bloc d'immobilisation 14 entre ses positions engagée et dégagée, et, en plus, un effort important de serrage axial des anneaux élastomères 30.

A cet effet, le système vis-écrou 42 assure l'entraînement du bloc d'immobilisation 14 par l'intermédiaire d'un mécanisme 86 à trois bielles 88, 90, 92. Les trois belles 88, 90, 92 s'étendent de préférence sensiblement dans un plan sensiblement tangent à une surface externe du bloc d'immobilisation 14. Les trois bielles sont articulées ensemble par une première de leurs extrémités respectives, autour d'un axe transversal A5 perpendiculaire au plan des bielles.

Une première 88 des bielles est articulée par son extrémité opposée autour d'un axe transversal A6 sur l'écrou 48 du système vis-écrou 42. Une deuxième bielle 90 est articulée par son extrémité opposée autour d'un axe A7 sur un corps fixe de l'antivol, en un point qui est agencé en arrière de la position du bloc d'immobilisation 14 lorsqu'il est en position dégagée.

Enfin, la troisième belle 92 est articulée autour d'un axe A8 sur l'extrémité avant 94 d'une patte d'accrochage 96 solidaire de la couronne d'appui 52 qui agit sur les anneaux élastomères 30. De préférence, la patte d'accrochage 96 s'étend axialement vers l'avant depuis la couronne 52 jusqu'en avant de l'extrémité axiale avant du bloc d'immobilisation 14.

Les axes A5, A6, A7, A8 sont transversaux, parallèles entre eux, et sensiblement perpendiculaires aux axes A1 et A2 de l'arbre 12 et de la vis 44.

Comme on peut le voir à la figure 10, il est prévu que, lorsque le bloc d'immobilisation 14 est en position engagée, les deuxième et troisième bielles 90, 92 respectivement reliées au corps fixe et à la couronne d'appui 52 sont alignées selon la direction de l'axe A1 tandis que la première bielle 88 reliée à l'écrou 48 s'étend transversalement.

Au contraire, lorsque le bloc d'immobilisation 14 est en position dégagée, les deuxième et troisième bielles 90, 92 forment un angle l'une avec l'autre.

Grâce à cette configuration, on s'aperçoit que, en partant de la position dégagée illustrée à la figure 9, le mécanisme à trois bielles provoque, pour un déplacement donné de l'écrou 48 axialement vers le bas, un déplacement relativement important du bloc d'immobilisation 14, lui aussi orienté axialement vers le bas.

Au contraire, lorsque le bloc d'immobilisation 14 a quasiment atteint sa position engagée, il est nécessaire d'avoir un déplacement important de l'écrou 48 pour provoquer un déplacement faible de l'extrémité de la troisième bielle 92 qui est reliée à la couronne d'appui 52. On obtient ainsi une forte démultiplication du mouvement entre le déplacement de l'écrou 48 et le déplacement de la couronne d'appui 52. De la sorte, on peut obtenir un effort de serrage très important au niveau des anneaux élastomères 30 sans qu'il soit nécessaire de recourir à un moteur électrique 46 trop puissant pour entraîner le système vis-écrou 42.

Le mécanisme à bielles permet de transformer le mouvement de l'écrou 48 en un mouvement parallèle de l'extrémité avant 94 de la patte d'accrochage 96, et donc du bloc d'immobilisation, tout en ayant une relation non linéaire entre les vitesses des deux mouvements.

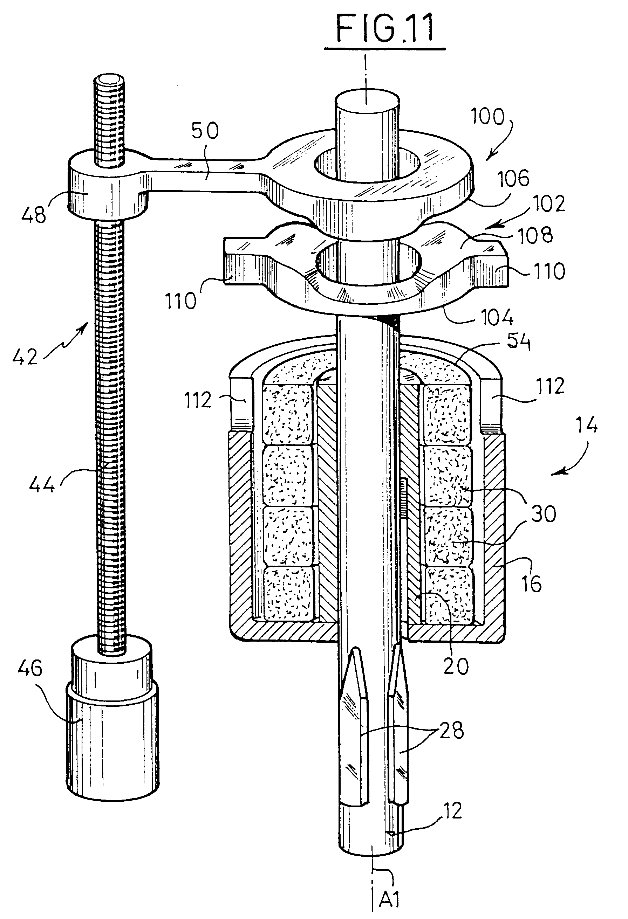

On a illustré sur la figure 11 un quatrième mode de réalisation de l'invention qui comporte un dispositif spécifique permettant d'augmenter le serrage axial de l'élément de friction lors d'une tentative d'effraction du véhicule lorsque le bloc d'immobilisation 14 est dans son état actif.

Ce quatrième mode de réalisation de l'invention reprend sensiblement les mêmes moyens d'entraînement que ceux du premier mode de réalisation illustré plus particulièrement aux figures 4 et 5.

En effet, l'entraînement du bloc 14 entre ses positions engagée et dégagée, et le serrage axial des anneaux élastomères 30 est assuré par deux couronnes 100, 102 annulaires superposées qui sont indépendantes l'une de l'autre.

La couronne supérieure 100 est liée à l'extrémité libre du bras d'actionnement 50 solidaire de l'écrou 48. La couronne supérieure 100 est ainsi immobilisée en rotation autour de l'axe A1 par le bras transversal 50. Toutefois, on peut prévoir qu'elle soit munie de moyens complémentaires de guidage.

La couronne inférieure 102 est en appui axialement vers l'avant par une face transversale avant 104 sur la face arrière 54 de l'empilement des anneaux 30. Eventuellement, un dispositif à rondelles et à ressort identique à celui décrit plus particulièrement en référence à la figure 6 peut être interposé entre la couronne inférieure 102 et les anneaux élastomères 30.

La couronne inférieure 102, qui est destinée à être reçue radialement entre les douilles interne 20 et externe 16, est immobilisée angulairement par rapport à la douille interne 20 par deux oreilles de guidage 110 qui s'étendent radialement vers l'extérieur, diamétralement à l'opposé l'une de l'autre, et qui sont destinées à être reçues à coulissement dans des fentes d'orientation axiale 112 aménagées dans la douille externe 16.

La couronne inférieure 102 est destinée à être serrée axialement entre la couronne supérieure 100 et les anneaux élastomères 30. Les deux couronnes 100, 102 sont donc destinées à venir en appui l'une contre l'autre par des surfaces transversales respectivement avant 106 et arrière 108.

Comme cela a été représenté de manière schématique sur la figure 11, les surfaces 106, 108 par lesquelles coopèrent les deux couronnes 100, 102 ne sont pas planes mais présentent au contraire des profils ondulés complémentaires présentant alternativement des creux et des bosses lorsqu'on les parcourt angulairement autour de l'axe A1.

Lorsque les deux couronnes 102 sont en appui axialement l'une contre l'autre en étant angulairement orientées dans une position de référence dans laquelle leurs surfaces respectives 106, 108 coïncident angulairement, l'épaisseur axiale de l'empilement des deux couronnes 100, 102 est minimale.

Au contraire, si l'une des deux couronnes est pivotée par rapport à l'autre autour de l'axe A1, le profil des surfaces 106, 108 est tel qu'il provoque simultanément un écartement axial des deux couronnes l'une par rapport à l'autre.

Par ailleurs, ce mode de réalisation de l'invention présente la particularité selon laquelle la douille externe 16 du bloc d'immobilisation 14 n'est pas rigoureusement immobile en rotation autour de l'axe A1. En effet, son guidage axial (non représenté) lui confère une course angulaire de part et d'autre d'une position angulaire neutre.

Le fonctionnement du dispositif spécifique d'application d'un effort supplémentaire de serrage va maintenant être décrit.

L'antivol 10 est tout d'abord amené de son état de repos à un état actif initial dans lequel la douille interne 20 est engagée sur les cannelures 28 de l'arbre 12 et dans lequel les couronnes 100, 102 exercent sur les anneaux élastomères 30 un effort de serrage axial initial qui permet d'obtenir un couple initial d'immobilisation de la douille interne 20 par rapport à la douille externe 16.

Dans cet état actif initial, la couronne inférieure 102 occupe sa position angulaire de référence par rapport à la couronne supérieure 100, c'est-à-dire que l'épaisseur axiale de l'empilement des deux couronnes 100, 102 est minimale.

Tant qu'aucun effort n'est exercé sur l'arbre de colonne 12, la douille externe 16 est maintenue dans une position angulaire neutre autour de l'axe A1 d'une part par l'action de moyens de rappel élastique (non représentés), et d'autre part par l'action des surfaces de commandes 106, 108.

Lorsqu'un effort est exercé sur l'arbre de colonne de direction 12 pour provoquer la rotation de celui-ci, le couple initial d'immobilisation créé par les anneaux élastomères 30 est tel que la douille interne 20, solidaire de l'arbre 12, entraîne en rotation la douille externe 16.

Or, la couronne inférieure 102 étant solidaire de la douille externe 16, elle pivote par rapport à la couronne supérieure 100 de sorte que les surfaces de commande 106, 108 provoquent un écartement axial des deux couronnes 100, 102. La couronne supérieure 100 étant immobile axialement car solidaire de l'écrou 48, la rotation de la couronne inférieure 102 se traduit donc par un déplacement axial de celle-ci vers l'avant qui tend à augmenter le serrage des anneaux élastomères 30, ce qui a pour conséquence d'augmenter le couple d'immobilisation qui lie en rotation les douilles interne et externe du bloc 14.

L'effort axial de serrage est ainsi susceptible d'augmenter jusqu'à ce que la douille externe 16 atteigne une de ses positions angulaires d'immobilisation délimitées par ses moyens de guidage.

Ainsi, l'effort "fourni" par le cambrioleur pour forcer l'antivol 10 est récupéré et utilisé pour augmenter le couple d'immobilisation fourni par l'antivol. Bien entendu, si le cambrioleur applique sur l'antivol un couple supérieur au couple maximum d'immobilisation, il va pouvoir provoquer la rotation des roues directrices du véhicule. Cependant, ce couple sera choisi pour être incompatible avec la conduite du véhicule.

Grâce à ce dispositif, il est donc possible de prévoir que le serrage axial initial des anneaux élastomères 30 soit relativement limité, de manière à ce qu'ils fournissent tout de même un couple initial de freinage par exemple de l'ordre de 40 mètres Newton. On évite ainsi d'appliquer sur les anneaux 30 une charge trop importante pendant tout le temps de verrouillage de l'antivol, ce qui évite que le matériau élastomère ne perde ses qualités d'élasticité. Par ailleurs, ce dispositif permet aussi de limiter le dimensionnement des moyens d'entraînement, à savoir notamment le moteur 46.

Dans tous les modes de réalisation de l'invention qui viennent d'être décrits, le déverrouillage de l'antivol s'obtient en procédant à l'inverse de ce qui est fait pour son verrouillage. En effet, le moteur électrique 46 est commandé en sens inverse pour libérer tout d'abord le serrage des anneaux élastomères 30 et pour ensuite ramener l'ensemble du bloc d'immobilisation 14 vers sa position arrière dégagée.

Toutefois, l'antivol selon l'invention permet en outre d'assurer une libération progressive du verrouillage en rotation de l'arbre de colonne 12. En effet, le couple d'immobilisation de la douille interne 20 par rapport à la douille externe 16 ne s'annule pas brutalement contrairement à ce qui est réalisé avec les dispositifs à pêne.

Or, par exemple, lorsque le véhicule est garé avec l'une des roues directrices en appui contre une bordure de trottoir, la roue exerce sur la colonne de direction un couple qui peut être relativement important. Aussi, au déverrouillage, si le couple d'immobilisation s'annule brutalement, le volant va se mettre brusquement à tourner sous l'action de la roue directrice en appui contre le trottoir, au risque de blesser le conducteur qui manipule le volant.

Au contraire, avec l'antivol 10 selon l'invention, la diminution progressive du couple d'immobilisation due à la diminution progressive de l'effort axial exercé sur les anneaux 30 va permettre d'obtenir que le volant ne tourne que lentement pour libérer la roue de l'appui du trottoir.

Par ailleurs, on pourra prévoir de munir l'antivol 10 de moyens pour détecter un tel effort sur la colonne de direction lorsque l'antivol 10 est actif. On peut par exemple placer des détecteurs d'effort au niveau des moyens de guidage de la douille externe 16, ceux-ci étant disposés de manière à capter les efforts orientés tangentiellement à l'axe A1. De la sorte, en fonction de l'effort mesuré par ces capteurs, il sera possible de commander le moteur électrique 46 de manière à ce que la libération du serrage axial des blocs élastomères 30 se fasse plus lentement pour ralentir encore les éventuels mouvements du volant.

## Revendications

1. Antivol pour un arbre de colonne de direction de véhicule automobile, caractérisé en ce qu'il comporte un bloc d'immobilisation (14) qui est monté coulissant axialement sur la colonne entre une position dégagée et une position engagée, en ce que le bloc d'immobilisation (14) comporte une douille externe (16) immobilisée en rotation et une douille interne (20) qui, en position engagée, est immobilisée en rotation par rapport à l'arbre de colonne (12), et en ce que le bloc d'immobilisation (14) comporte un dispositif à friction (30) qui est susceptible d'être commandé entre un état de repos et un état actif dans lequel il assure l'immobilisation en rotation de la douille interne (20) par rapport à la douille externe (16).

2. Antivol selon la revendication 1, caractérisé en ce que le dispositif à friction comporte un élément de friction (30) qui est déformable élastiquement et qui est commandé par serrage axial pour assurer l'immobilisation de la douille interne (20) par rapport à la douille externe (16).

3. Antivol selon l'une des revendications 1 ou 2, caractérisé en ce que le bloc (14) est déplacé entre ses positions dégagée et engagée par un dispositif d'actionnement (42, 50, 86) qui assure la commande du dispositif à friction (30) lorsque le bloc (14) est en position engagée.

4. Antivol selon la revendication 3 prise en combinaison avec la revendication 2, caractérisé en ce que l'élément de friction (30) est serré axialement par le dispositif d'actionnement contre une paroi transversale (32) du bloc (14) qui est solidaire axialement des douilles interne (20) et externe (16), et en ce que, en position engagée, les douilles (16, 20) sont immobilisées axialement de manière que le dispositif d'actionnement (42, 50, 86) puisse assurer le serrage de l'élément de friction (30).

5. Antivol selon la revendication 4, caractérisé en ce que le dispositif d'actionnement (42, 50, 86) assure le déplacement du bloc (14) de sa position dégagée à sa position engagée en coopérant en appui axialement contre l'élément de friction (30), et en ce que l'effort transmis à l'élément de friction (30) au cours du déplacement du bloc est inférieur à l'effort nécessaire pour déformer l'élément de friction (30) vers son état actif.

6. Antivol selon l'une quelconque des revendications 3 à 5, caractérisé en ce que le dispositif d'actionnement comporte un actionneur linéaire (42) qui agit sur l'élément de friction (30) par l'intermédiaire d'un organe de transmission (50, 86).

7. Antivol selon la revendication 6, caractérisé en ce que l'actionneur linéaire (42) s'étend parallèlement à l'arbre de colonne (12), et en ce qu'il agit sur l'élément de friction (30) par l'intermédiaire d'un levier (50) qui est articulé sur le bloc (14) autour d'un axe transversal (A4) perpendiculaire à l'axe (A1) de la colonne.

8. Antivol selon la revendication 6, caractérisé en ce que l'actionneur linéaire (42) agit sur l'élément de friction (30) par l'intermédiaire d'un mécanisme (86) a trois bielles (88, 90, 92) qui sont articulées ensemble autour d'un axe transversal (A5) perpendiculaire à l'axe (A1) de la colonne par une première de leurs extrémités respectives et qui sont articulées par leurs extrémités opposées respectivement sur un élément mobile (48) de l'actionneur (42), sur un corps fixe de l'antivol, et sur une couronne d'appui (52) qui est en appui contre l'élément de friction (30).

9. Antivol selon la revendication 8, caractérisé en ce que lorsque le bloc d'immobilisation est en position engagée et que le dispositif à friction est à l'état actif, les bielles (90, 92) reliées au corps fixe et à la couronne (52) d'appui sont alignées sensiblement parallèlement à l'arbre de colonne (12), selon des sens opposés autour de leurs extrémités d'articulation commune, et la bielle (88) reliée à l'actionneur (48, 42) s'étend sensiblement perpendiculairement à l'axe (A1) de l'arbre de colonne (12).

10. Antivol selon la revendication 9, caractérisé en ce que le bloc (14) est déplacé d'arrière en avant le long de l'arbre de colonne (12) de sa position dégagée à sa position engagée, en ce que la couronne d'appui (52) est en appui contre une face arrière (54) de l'élément de friction (30), et en ce que la couronne d'appui (52) comporte au moins une patte (96) qui s'étend vers l'avant et sur une extrémité avant (96) de laquelle est articulée la bielle correspondante (92) du mécanisme (86).

11. Antivol selon l'une quelconque des revendications 8 à 10, caractérisé en ce que le corps fixe sur lequel est accrochée l'une (90) des bielles est agencé axialement en arrière de la position du bloc d'immobilisation (14) en position dégagée.

12. Antivol selon l'une quelconque des revendications 6 à 11, caractérisé en ce que l'actionneur linéaire (42) est un système vis écrou dont la vis (44) est agencée parallélement à l'arbre de la colonne (12) et dont l'écrou (48), immobilisé en rotation, assure le déplacement axial du bloc d'immobilisation (14).

13. Antivol selon l'une quelconque des revendications précédentes, caractérisé en ce que, lorsque le bloc d'immobilisation (14) est en position engagée, la douille interne (20) est rendue solidaire de l'arbre de colonne (12) par des cannelures en relief (24, 28) d'orientation axiale.

14. Antivol selon la revendication 13, caractérisé en ce que les cannelures (24, 28) de la douille interne (20) et de l'arbre (12) comportent chacune une extrémité axiale d'engagement (68) dont la largeur selon une direction tangentielle se réduit pour former une pointe.

15. Antivol selon la revendication 14, caractérisé en ce que la douille interne (20) comporte une bague d'orientation (74) qui coopère avec les cannelures (28) de l'arbre (12) pour provoquer une rotation de la douille interne (20) si, au moment de l'engagement de la douille (20), les cannelures (24, 28) de la douille (20) et de l'arbre (12) se présentent axialement pointe contre pointe.

16. Antivol selon la revendication 15, caractérisé en ce que la bague d'orientation (74) de la douille interne (20) est fixée à l'extrémité axiale avant de la douille (20) dans le sens de son engagement sur les cannelures (28) de l'arbre (12).

17. Antivol selon la revendication 16, caractérisé en ce que la bague d'orientation (74) comporte deux dents (78, 79) qui s'étendent axialement vers l'avant, qui sont sensiblement diamétralement opposées l'une par rapport à l'autre de part et d'autre de l'axe (A1) de l'arbre (12), et qui comportent une extrémité avant d'engagement effilée selon une direction tangentielle, en ce que les extrémités avant des dents (78, 79) sont conformées de telle sorte que les deux dents ne peuvent être simultanément agencées pointe contre pointe en regard des cannelures (28) de l'arbre (12), en ce que la bague (74) est mobile par rapport à la douille interne (20) selon une direction diamétrale de la bague (74) passant par l'une des dents (78, 79), et en ce que les extrémités d'engagement (80, 68) des dents (78, 79) de la bague (74) et des cannelures (28) de l'arbre (12) comportent une surface radiale (84, 72), respectivement interne et externe, qui est biseautée de manière que l'extrémité d'engagement (80, 68) présente une épaisseur radiale qui se réduit.

18. Antivol selon l'une quelconque des revendications 2 à 17, caractérisé en ce que l'antivol comporte des moyens pour augmenter le serrage axial de l'élément de friction (30) lorsqu'un couple est appliqué sur l'arbre de colonne (12) alors que le bloc d'immobilisation (14) est dans son état actif.

19. Antivol selon la revendication 18, caractérisé en ce que l'élément de friction (30) est serré axialement par l'intermédiaire de deux couronnes (100, 102) superposées indépendantes qui sont en appui axialement l'une contre l'autre par un jeu de surfaces de commande (106, 108), en ce qu'une première couronne (100) est immobile en rotation autour de son axe (A1) par rapport à la structure du véhicule tandis que la seconde couronne (102) est liée en rotation avec la douille externe (16), en ce que la douille externe possède une course angulaire libre autour de l'axe (A1) de la colonne entre deux positions angulaires d'immobilisation, de part et d'autre d'une position angulaire neutre, et en ce que, lorsque la douille externe (16) est écartée angulairement de sa position neutre, la seconde couronne (102) tourne par rapport à la première (100) et les surfaces de commandes (106, 108) des couronnes coopèrent pour écarter axialement les couronnes (100, 102) l'une de l'autre et ainsi provoquer un serrage supplémentaire de l'élément de friction (30).

20. Antivol selon l'une quelconque des revendications précédentes, caractérisé en ce qu'il comporte un capteur d'effort qui détecte, lorsque le bloc d'immobilisation (14) est dans son état actif, qu'un couple est appliqué sur l'arbre de colonne (12).
